# EUROPÄISCHE PATENTSCHRIFT

(11) **EP 2 331 841 B1**
(45) Veröffentlichungstag und Bekanntmachung des Hinweises auf die Patenterteilung: **12.10.2016**
(21) Anmeldenummer: 09781543.5
(22) Anmeldetag: 06.08.2009
(51) Int. Cl.: F16F 9/04, F16F 9/32

(54) **IDENTIFIKATIONSEINRICHTUNG FÜR EINE LUFTFEDER**
IDENTIFICATION DEVICE FOR A PNEUMATIC SPRING
DISPOSITIF D' IDENTIFICATION POUR UN RESSORT PNEUMATIQUE

(30) Priorität: 25.09.2008 DE 102008048961
(43) Veröffentlichungstag der Anmeldung: 15.06.2011
(73) Patentinhaber: ContiTech Luftfedersysteme GmbH, 30165 Hannover (DE)
(72) Erfinder: RECK, Siegfried, 31582 Nienburg (DE); GAWINSKI, Hubertus, 31867 Lauenau (DE)
(74) Vertreter: Finger, Karsten
(86) Internationale Anmeldenummer: PCT/EP2009/060185
(87) Internationale Veröffentlichungsnummer: WO 2010/034561

(56) Entgegenhaltungen:
- EP-A2- 1 985 886
- CL-A1- 2008 000 872
- CN-Y- 2 904 127
- US-A1- 2005 056 502
- US-A1- 2006 169 386
- US-B1- 6 898 489

## Beschreibung

Die Erfindung betrifft eine Identifikationseinrichtung für eine Luftfeder mit einer Luftfeder aus mindestens einem Kolben, einem Deckel und einem Balg, wobei der Balg mindestens eine Elastomermatrix aufweist, einer Speicher-Sende-Einrichtung, einem Lesegerät und einer Datenspeichereinheit.

Derartige Identifikationssysteme sind an sich bekannt und beispielsweise in Nutzfahrzeugen im Einsatz. So zeigen die DE 698 08 028 T2 oder die US 6,603,179 ein Identifikationssystem, bei dem eine aktivierbare Speichereinheit Daten, die sich auf die Luftfeder beziehen, speichern und mittels eines mit einer internen Energiequelle ausgestatteten Senders zu einer Abfrageeinrichtung übertragen kann.

Dabei kann die Speichereinheit sowohl innerhalb als auch außerhalb der Luftfeder angeordnet sein. Die in dieser Schrift offenbarte Speicher-Sende-Einrichtung ist jedoch relativ groß und bedarf einer internen Batterie, die die Speicher-Sende-Einrichtung mit Energie versorgt. Obwohl Batterien relativ unempfindlich und langlebig sind, ist deren Lebensdauer jedoch begrenzt. Außerdem besteht die Gefahr, dass durch einen vorzeitigen Ausfall der Batterie das gesamte Identifikationssystem funktionslos wird. Durch die Größe der Speicher-Sende-Einrichtung ist bei der Montage auch immer die Gefahr gegeben, dass die Speicher-Sende-Einrichtung beschädigt wird. Da die Speicher-Sende-Einrichtung Umwelteinflüssen ausgesetzt ist, bedarf es außerdem eines entsprechend stabilen Schutzgehäuses.

Der Erfindung liegt die Aufgabe zugrunde, ein Identifikationssystem zu schaffen, deren Speicher-Sende-Einrichtung ohne lebensdauerbegrenzende Energieversorgung bei geringer Größe und geschützt gegen Umwelteinflüsse einen zuverlässigen und kostengünstigen Betrieb des Identifikationssystems ermöglicht.

Diese Aufgabe wird dadurch gelöst, dass die Speicher-Sende-Einrichtung als RadioFrequency-Identification-Transponder (RFID-Transponder) ausgebildet ist, der in die Elastomermatrix des Balges vollständig eingebettet ist, durch das Lesegerät ein elektromagnetisches Feld erzeugbar ist und der RFID-Transponder mindestens eine Einrichtung aufweist, durch die die für die Versorgung des RFID-Transponders notwendige Energie dem durch das Lesegerät erzeugten elektromagnetischen Feld entnehmbar ist und dass bei dem RFID-Transponder zur Verfügung stehender Energie Informationen zwischen RFID-Transponder und Lesegerät austauschbar sind.

Ein derartiges Identifikationssystem hat den Vorteil, dass der RFID-Transponder vollständig ohne interne Energieversorgung auskommt. Stattdessen wird die Energie aus dem elektromagnetischen Feld des Lesegerätes entnommen, wobei dies nur dann geschieht, wenn das Lesegerät aktiviert ist.

RFID-Transponder der genannten Art sind in großer Vielfalt handelsüblich und preiswert auf dem Markt. Die elektronischen Bauteile derartiger RFID-Transponder sind meist von einer Kunststoffumhüllung umgeben, die die Bauteile zusammenhält und vor äußeren Einflüssen schützt. Durch die geringe Größe der RFID-Transponder ist eine Veränderung des elastischen Verhaltens des Balges nur sehr gering. Ist der Sensor beispielsweise an einer weniger auf Verformung des Balges beanspruchten Stelle angeordnet, kann diese Veränderung vernachlässigt werden.

Durch die vollständige Einbettung des RFID-Transponders in die elastomere Matrix des Balges ist der RFID-Transponder zusätzlich zu seiner Umhüllung sehr gut gegen äußere Einflüsse geschützt.

In einer weiteren Ausführungsform der Erfindung weist der RFID-Transponder eine eindeutige und einzigartige elektronische Bauteilkennung auf, die durch den RFID-Transponder aussendbar und durch das Lesegerät empfangbar ist, wobei die Bauteilkennung in der Datenspeichereinheit speicherbar ist, die einzigartige Bauteilkennung des RFID-Transponders in der Datenspeichereinheit mit Daten, die während der Produktion der Luftfeder erfassbar und in der Datenspeichereinheit speicherbar sind, kombinierbar ist, wodurch die Identität der Luftfeder eindeutig ermittelbar ist.

In einer Weiterbildung der Erfindung ist der RFID-Transponder als Schreib-Lese-Transponder mit einem Speicherchip ausgeführt, wobei auf dem Speicherchip Daten sicher und dauerhaft speicherbar sind und die Daten bei dem RFID-Transponder zur Verfügung stehender Energie vom Lesegerät in den Speicherchip übertragbar sind und/oder vom Lesegerät vom Speicherchip lesbar sind.

Durch die Speicherung von Daten direkt im Speicherchip des RFID-Transponders ist ein Abgleich mit Daten aus der Datenspeichereinheit nicht notwendig, um die Identität der Luftfeder festzustellen. Dies ermöglicht auch eine Identifikation der Luftfeder ohne einen Zugang zu den entsprechenden Datenverarbeitungssystemen.

In einer Weiterbildung der Erfindung sind die auf dem Speicherchip gespeicherten Daten durch Verschlüsselungsalgorithmen verschlüsselbar.

Die Verschlüsselung der Daten sorgt für eine hohe Datensicherheit.

In einer Weiterbildung der Erfindung sind die auf dem Speicherchip gespeicherten Daten durch mindestens einen hardwareseitig in den Speicherchip integrierten Verschlüsselungsalgorithmus verschlüsselbar.

In einer Weiterbildung der Erfindung sind die Verschlüsselungsalgorithmen in periodischen oder nichtperiodischen Zeitabständen veränderbar.

Durch diese Eigenschaften der Verschlüsselung lässt sich eine weiter verbesserte Datensicherheit erzielen.

Der Erfindung liegt weiterhin die Aufgabe zugrunde, ein Verfahren zu schaffen, durch das ein für ein Luftfederidentifikationssystem nach Anspruch 1 geeigneter Abrollbalg herstellbar ist.

Diese Aufgabe wird durch ein Verfahren gelöst, das mindestens folgende Arbeitsschritte aufweist, nämlich
- Aufbau eines Balgrohlings mindestens aus einer Festigkeitsträgerlage und mindestens einem unvulkanisierten Elastomermaterial,
- Einbringen eines RFID-Transponders nach Anspruch 1 oder 2 in das Elastomermaterial so, dass der RFID-Transponder vollständig in das unvulkanisierte Elastomermaterial eingebettet wird,
- Vulkanisation des Balges.

Beispielsweise kann der RFID-Transponder direkt auf die Festigkeitsträgerlage aufgebracht werden, wo er dann durch entsprechende Decklagen aus Rohgummimischung abgedeckt wird. Durch die anschließende Vulkanisation ist der RFID-Transponder dann vollständig vom elastischen Material umgeben. Zusätzlich zu der üblicherweise den RFID-Transponder umgebenden Kunststoffumhüllung ist der RFID-Transponder durch diese Anordnung sehr gut gegen äußere Einflüsse geschützt.

In einer Weiterbildung der Erfindung werden die elektronischen Bauteile des RFID-Transponders ohne die ihn umgebende Umhüllung direkt in das unvulkanisierte Elastomermaterial eingebracht.

Durch den Wegfall der Kunststoffumhüllung wird der RFID-Transponder preiswerter und seine Steifigkeit gegen elastische Verformung geringer. Dies hat den Vorteil, dass bei der Platzierung des RFID-Transponders weniger Rücksicht auf eventuelle Verformungen des fertig vulkanisierten Balges genommen werden muss, da das elastische Verhalten des fertig vulkanisierten Balges durch den nun elastischeren RFID-Transponder noch weniger verändert wird.

Anhand der Zeichnung wird nachstehend ein Ausführungsbeispiel der Erfindung näher erläutert. Es zeigt:
- Fig. 1: ein Luftfederidentifikationssystem als Prinzipdarstellung und
- Fig. 2: eine Ausschnittvergrößerung der Luftfeder aus Fig. 1

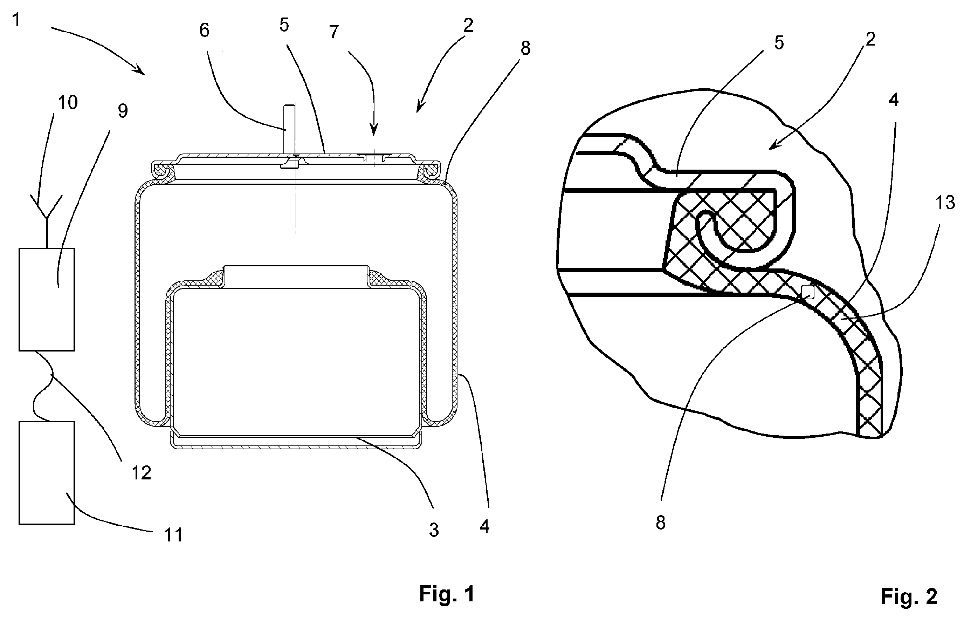

In Fig. 1 ist ein Luftfederidentifikationssystem 1 mit einer Luftfeder 2 gezeigt. Die Luftfeder 2 weist einen Kolben 3, einen Balg 4, und einen Deckel 5 auf, wobei der Deckel 5 einen Befestigungsbolzen 6 und einen Luftanschluss 7 aufweist. Im Balg 4 ist ein RFID-Transponder 8 eingebettet. Eine Lesegerät 9 mit einer Antenne 10 ist mit einer Datenspeichereinheit 11 über ein Kabel 12 verbunden und steht mit dem RFID-Transponder 8 über ein nicht gezeigtes magnetisches Feld in Wirkverbindung.

In Fig. 2 ist eine Ausschnittvergrößerung der Luftfeder 2 gezeigt. Der Balg 4 ist am Deckel 5 luftdicht befestigt. Der RFID-Transponder 8 ist vollständig von der elastomeren Matrix 13 des Balges 4 umgeben.

Der RFID-Transponder 8 bezieht seine Energie über eine integrierte, hier nicht gezeigte Antenne aus dem hier ebenfalls nicht gezeigten elektrischen Feld, welches von dem Lesegerät 9 erzeugt ist und überträgt dabei Daten an das Lesegerät 9. Die Daten aus dem RFID-Transponder 8 sind über das Kabel 13 an die Datenspeichereinheit 11 übertragbar. Die in der Datenspeichereinheit 11 gespeicherten Daten sind auf einer nicht gezeigten Datenverarbeitungsanlage weiter verarbeitbar, so dass die Identität der Luftfeder 2 feststellbar ist.

### Bezugszeichenliste

### (Teil der Beschreibung)

- 1: Luftfederidentifikationssystem
- 2: Luftfeder
- 3: Kolben
- 4: Balg
- 5: Deckel
- 6: Befestigungsbolzen
- 7: Luftanschluss
- 8: RFID-Transponder
- 9: Lesegerät
- 10: Antenne des Lesegerätes 9
- 11: Datenspeichereinheit
- 12: Kabel zwischen Lesegerät 9 und Datenspeichereinheit 11
- 13: Elastomermatrix des Balges 4

## Patentansprüche

1. Identifikationseinrichtung (1) für eine Luftfeder (2) mit einer Luftfeder (2) mindestens aus einem Kolben (3), einem Deckel (5) und einem Balg (4), wobei der Balg (4) mindestens eine Elastomermatrix (13) aufweist, einer Speicher-Sende-Einrichtung (8), einem Lesegerät (9) und einer Datenspeichereinheit (11),
**dadurch gekennzeichnet, dass**
- die Speicher-Sende-Einrichtung (8) als Radio-Frequency-Identification-Transponder (RFID-Transponder) (8) ausgebildet ist, der in die Elastomermatrix (13) des Balges (4) vollständig eingebettet ist,
- durch das Lesegerät (9) ein elektromagnetisches Feld erzeugbar ist und
- der RFID-Transponder (8) mindestens eine Einrichtung aufweist, durch die die für die Versorgung des RFID-Transponders (8) notwendige Energie dem durch das Lesegerät (9) erzeugten elektromagnetischen Feld entnehmbar ist und
- dass bei dem RFID-Transponder (8) zur Verfügung stehender Energie Informationen zwischen RFID-Transponder (8) und Lesegerät (9) austauschbar sind.

2. Identifikationseinrichtung (1) nach Anspruch 1, **dadurch gekennzeichnet, dass**
- der RFID-Transponder (8) eine eindeutige und einzigartige elektronische Bauteilkennung aufweist, die durch den RFID-Transponder (8) aussendbar und durch das Lesegerät (9) empfangbar ist,
- wobei die Bauteilkennung in der Datenspeichereinheit (11) speicherbar ist und
- die einzigartige Bauteilkennung des RFID-Transponders (8) in der Datenspeichereinheit (11) mit Daten, die während der Produktion der Luftfeder (2) erfassbar und in der Datenspeichereinheit (11) speicherbar sind, kombinierbar ist, wodurch die Identität der Luftfeder (2) eindeutig ermittelbar ist.

3. Identifikationseinrichtung (1) nach Anspruch 1 oder 2, **dadurch gekennzeichnet, dass** der RFID-Transponder (8) als Schreib-Lese-Transponder mit einem Speicherchip ausgeführt ist, wobei auf dem Speicherchip Daten sicher und dauerhaft speicherbar sind und die Daten bei dem RFID-Transponder (8) zur Verfügung stehender Energie vom Lesegerät (9) in den Speicherchip übertragbar sind und/oder vom Lesegerät (9) vom Speicherchip lesbar sind.

4. Identifikationseinrichtung (1) nach Anspruch 3, **dadurch gekennzeichnet, dass** die auf dem Speicherchip gespeicherten Daten durch Verschlüsselungsalgorithmen verschlüsselbar sind.

5. Identifikationseinrichtung (1) nach Anspruch 4, **dadurch gekennzeichnet, dass** die auf dem Speicherchip gespeicherten Daten durch mindestens einen hardwareseitig in den Speicherchip integrierten Verschlüsselungsalgorithmus verschlüsselbar sind.

6. Identifikationseinrichtung (1) nach Anspruch 4 oder 5, **dadurch gekennzeichnet, dass** die Verschlüsselungsalgorithmen in periodischen oder nichtperiodischen Zeitabständen veränderbar sind.

7. Verfahren zur Herstellung eines Balges (4) nach Anspruch 1, 2 oder 3, **gekennzeichnet durch** mindestens folgende Arbeitsschritte, nämlich
- Aufbau eines Balgrohlings mindestens aus einer Festigkeitsträgerlage und mindestens einem unvulkanisierten Elastomermaterial,
- Einbringen eines RFID-Transponders (8) nach Anspruch 1 oder 2 in das Elastomermaterial so, dass der RFID-Transponder (8) vollständig in das unvulkanisierte Elastomermaterial eingebettet wird,
- Vulkanisation des Balges (4).

8. Verfahren nach Anspruch 7, **dadurch gekennzeichnet, dass** die elektronischen Bauteile des RFID-Transponders (8) ohne die ihn umgebende Umhüllung direkt in das unvulkanisierte Elastomermaterial eingebracht werden.

## Claims

1. Identification device (1) for a pneumatic spring (2), having a pneumatic spring (2) comprising at least one piston (3), one cover (5) and one bellows (4), wherein the bellows (4) has at least one elastomer matrix (13), one transmit memory device (8), one read unit (9) and one data storage unit (11),
**characterized in that**
- the transmit memory device (8) is embodied as a radiofrequency identification transponder (RFID transponder) (8) which is completely embedded in the elastomer matrix (13) of the bellows (4),
- an electromagnetic field can be generated by the read unit (9), and
- the RFID transponder (8) has at least one device by which the energy necessary to supply the RFID transponder (8) can be drawn from the electromagnetic field generated by the read unit (9), and
- that when energy is available to the RFID transponder (8), information can be exchanged between the RFID transponder (8) and the read unit (9).

2. Identification device (1) according to Claim 1, **characterized in that**
- the RFID transponder (8) has an unambiguous and unique electronic component identifier which can be broadcast by the RFID transponder (8) and received by the read unit (9),
- wherein the component identifier can be stored in the data storage unit (11), and
- the unique component identifier of the RFID transponder (8) can be combined in the data storage unit (11) with data which can be acquired during the production of the pneumatic spring (2) and can be stored in the data storage unit (11), as a result of which the identity of the pneumatic spring (2) can be determined in an unambiguous way.

3. Identification device (1) according to Claim 1 or 2, **characterized in that** the RFID transponder (8) is embodied as a read/write transponder with a memory chip, wherein data can be reliably and permanently stored on the memory chip and, when energy is available to the RFID transponder (8), the data can be read into the memory chip by the read unit (9) and/or can be read from the memory chip by the read unit (9).

4. Identification device (1) according to Claim 3, **characterized in that** the data which are stored on the memory chip can be encrypted by means of encryption algorithms.

5. Identification device (1) according to Claim 4, **characterized in that** the data which are stored on the memory chip can be encrypted by means of at least one encryption algorithm which is integrated in terms of hardware into the memory chip.

6. Identification device (1) according to Claim 4 or 5, **characterized in that** the encryption algorithms can be changed at periodic or nonperiodic time intervals.

7. Method for manufacturing a bellows (4) according to Claim 1, 2 or 3, **characterized by** at least the following working steps, specifically
- construction of a bellows blank from at least one rigidity carrier layer and at least one nonvulcanized elastomer material,
- insertion of an RFID transponder (8) according to Claim 1 or 2 into the elastomer material with the result that the RFID transponder (8) is completely embedded in the nonvulcanized elastomer material, and
- vulcanization of the bellows (4).

8. Method according to Claim 7, **characterized in that** the electronic components of the RFID transponder (8) are inserted directly into the nonvulcanized elastomer material without the encapsulation surrounding it.

## Revendications

1. Dispositif d'identification (1) destiné à un ressort pneumatique (2), comportant un ressort pneumatique (2) constitué d'au moins un piston (3), d'un couvercle (5) et d'un soufflet (4), dans lequel le soufflet (4) comporte au moins une matrice élastomère (13), un dispositif d'émission à mémoire (8), un appareil de lecture (9) et une unité de stockage de données (11),
**caractérisé en ce que**
- le dispositif d'émission à mémoire (8) et réalisé sous la forme d'un transpondeur d'identification radiofréquence (transpondeur RFID) (8) qui est entièrement incorporé dans la matrice élastomère (13) du soufflet (4),
- un champ électromagnétique peut être généré par l'appareil de lecture (9), et
- le transpondeur RFID (8) comporte au moins un dispositif au moyen duquel l'énergie nécessaire à l'alimentation du transpondeur RFID (8) peut être prélevée à partir du champ électromagnétique généré par l'appareil de lecture (9), et
- **en ce que**, au moyen de l'énergie disponible pour le transpondeur RFID (8), des informations peuvent être échangées entre le transpondeur RFID (8) et l'appareil de lecture (9).

2. Dispositif d'identification (1) selon la revendication 1, **caractérisé en ce que**
- le transpondeur RFID (8) comporte un identifiant de composant électronique unique et distinct qui peut être émis par le transpondeur RFID (8) et être reçu par l'appareil de lecture (9),
- dans lequel l'identifiant de composant peut être stocké dans l'unité de stockage de données (11), et
- l'identifiant de composant unique et distinct du transpondeur RFID (8) peut être combiné dans l'unité de stockage de données (11) à des données qui peuvent être détectées pendant la production du ressort pneumatique (2) et être stockées dans l'unité de stockage de données (11), ce qui permet de déterminer de manière unique l'identité du ressort pneumatique (2).

3. Dispositif d'identification (1) selon la revendication 1 ou 2, **caractérisé en ce que** le transpondeur RFID (8) est réalisé sous la forme d'un transpondeur à lecture et écriture doté d'une puce de mémoire, dans lequel des données peuvent être stockées de manière sécurisée et durable dans la puce de mémoire et les données peuvent être transmises de l'appareil de lecture (9) vers la puce de mémoire au moyen de l'énergie disponible pour le transpondeur RFID (8) et/ou peuvent être lues par l'appareil de lecture (9) depuis la puce de mémoire.

4. Dispositif d'identification (1) selon la revendication 3, **caractérisé en ce que** les données stockées sur la puce de mémoire peuvent être chiffrées par des algorithmes de chiffrement.

5. Dispositif d'identification (1) selon la revendication 4, **caractérisé en ce que** les données stockées sur la puce de mémoire peuvent être chiffrées par au moins un algorithme de chiffrement intégré sous forme matérielle dans la puce de mémoire.

6. Dispositif d'identification (1) selon la revendication 4 ou 5, **caractérisé en ce que** les algorithmes de chiffrement peuvent être modifiés à des intervalles de temps périodiques ou non périodiques.

7. Procédé de fabrication d'un soufflet (4) selon la revendication 1, 2 ou 3, **caractérisé en ce qu'**il comprend au moins les étapes consistant à :
- réaliser une préforme de soufflet au moins à partir d'une couche de support rigide et d'au moins un matériau élastomère non vulcanisé,
- insérer un transpondeur RFID (8) selon la revendication 1 ou 2 dans le matériau élastomère de manière à ce que le transpondeur RFID (8) soit entièrement incorporé dans le matériau élastomère non vulcanisé,
- vulcaniser le soufflet (4).

8. Procédé selon la revendication 7, **caractérisé en ce que** les composants électroniques du transpondeur RFID (8) sont directement introduits sans l'enveloppe qui les entoure dans le matériau élastomère non vulcanisé.
